# EUROPÄISCHE PATENTSCHRIFT

(11) **EP 0 541 601 B1**
(45) Veröffentlichungstag und Bekanntmachung des Hinweises auf die Patenterteilung: **21.12.1994**
(21) Anmeldenummer: 91913338.9
(22) Anmeldetag: 31.07.1991
(51) Int. Cl.: B01J 37/00, B01J 37/34, B01J 37/02, B01J 35/02, B01D 53/36

(54) **KATALYSATOR FÜR DEN EINSATZ IN HEISSEN ABGASEN UND VERFAHREN ZU SEINER HERSTELLUNG**
CATALYST FOR USE IN HOT EXHAUST GASES AND PROCESS FOR MAKING IT
CATALYSEUR A UTILISER DANS DES GAZ D'ECHAPPEMENT CHAUDS ET PROCEDE DE FABRICATION CORRESPONDANT

(30) Priorität: 03.08.1990 DE 4024734
(43) Veröffentlichungstag der Anmeldung: 19.05.1993
(73) Patentinhaber: SIEMENS AKTIENGESELLSCHAFT, 80333 München (DE)
(72) Erfinder: HUMS, Erich, D-8600 Bamberg (DE); LANDGRAF, Norbert, D-8501 Rückersdorf (DE); STAMM, Hubert, D-8500 Nürnberg (DE)
(86) Internationale Anmeldenummer: DE9100615
(87) Internationale Veröffentlichungsnummer: WO9202302

(56) Entgegenhaltungen:
- EP-A- 0 362 448
- DE-A- 2 853 023

## Beschreibung

Die Erfindung bezieht sich auf einen Katalysator für den Einsatz in heißen Abgasen mit einer oberflächlich aufgerauhten metallischen Tragstruktur und einer auf der aufgerauhten metallischen Tragstruktur aufgebrachten katalytisch aktiven Beschichtung.

Der Einsatzbereich solcher Katalysatoren umfaßt sowohl den gesamten Bereich der fossilen Verbrennung als auch den Bereich heißer Abgase in der industriellen Fertigung. Insbesondere bei fossil befeuerte Kraftwerken werden häufig sogenannte Plattenkatalysatoren - das sind Katalysatoren mit einer katalytisch beschichteten metallischen Tragstruktur - zur Entstickung der Rauchgase eingesetzt. Dabei werden die einzelnen Katalysatorplatten parallel zueinander ausgerichtet und im vorgegebenen Abstand zueinander in sogenannten Katalysatorelementrahmen gestellt (vergleiche G 89 01 773.0) und vom Rauchgas durchströmt. Zusammen mit zuvor eingedüstem Ammoniak werden die in den Rauchgasen enthaltenen Stickoxide an den katalytisch aktiven Oberflächen zu Stickstoff und Wasserdampf reduziert. Infolge der beim Vorbeiströmen der Rauchgase induzierten mechanischen Schwingungen und des Abriebs durch mitgeführte Aschepartikel besteht bei solchen Plattenkatalysatoren das Problem, die katalytisch aktive Beschichtung auf der metallischen Tragstruktur, im allgemeinen einem Streckmetallblech, Lochblech oder metallischem Flechtwerk hinreichend fest zu verankern, um ein Abblättern zu vermeiden.

Es ist bekannt, die metallische Tragstruktur vor der Aufbringung der katalytisch aktiven Beschichtung durch Sandstrahlen und anschließendem Flammspritzen von Aluminium aufzurauhen (vergleiche US-PS 3,271,326).

Des weiteren ist es bekannt, die Haftung der Beschichtung in sich und auf der metallischen Tragstruktur durch Zumischen von Vernetzungsmitteln, wie zum Beispiel von Phosphaten, zur katalytisch aktiven Masse zu verbessern (vergleiche DE-OS 26 58 569).

Es ist auch bereits bekannt, die Haftung auf der Tragstruktur dadurch zu verbessern, daß man der katalytisch aktiven Masse vor dem Auftragen auf die metallische Tragstruktur temperaturbeständige Fasern, etwa Glasfasern, beimischt. Durch diese Maßnahme wird die Haftung der katalytisch aktiven Beschichtung dadurch verbessert, daß die Beschichtung in sich besser zusammenhält, weniger jedoch dadurch, daß die Beschichtung auf der Tragstruktur besser haftet (vergleiche DE-OS 26 58 659).

Trotz aller dieser Maßnahmen bleibt die Haftung der katalytisch aktiven Massen auf der metallischen Tragstruktur ein Faktor, der bei der Konzeption von Plattenkatalysatoren die maximale Standzeit wesentlich beeinflußt. Verbesserungen wären hier wünschenswert.

Der Erfindung liegt daher die Aufgabe zugrunde, die Haftung der katalytisch aktiven Massen auf der aufgerauhten metallischen Tragstruktur bei Plattenkatalysatoren zu verbessern. Diese Aufgabe wird durch die Merkmale der Ansprüche 1 und 12 gelöst. Weitere vorteilhafte Ausgestaltungen der Erfindung sind den Ansprüchen 2 bis 11 und 13 bis 26 zu entnehmen.

Dadurch, daß bei einem Katalysator der eingangs genannten Art die metallische Tragstruktur erfindungsgemäß durch Funkenerosion aufgerauht ist, ist ein Weg gewiesen worden, wie verfahrensbedingt eine Rauhigkeit erzielt wird, die besser als alle anders erzeugten Rauhigkeiten eine formschlüssige Verankerung der katalytisch aktiven Beschichtung auf der metallischen Tragstruktur erlaubt.

Durch das Vorbeiführen der metallischen Tragstruktur vor der Auftragung der katalytisch aktiven Masse an einer sich quer zur Transportrichtung der Tragstruktur mit gleichbleibendem Abstand von derselben erstreckenden Elektrode läßt sich deren Oberfläche ziemlich gleichmäßig durch Funkenerosion aufrauhen.

Es kommt der Festigkeit, mit der die katalytische aktive Beschichtung auf der metallischen Tragstruktur haftet, zugute, wenn als metallische Tragstruktur in Ausgestaltung der Erfindung ein Streckmetallblech, ein Lochblech oder metallisches Flechtwerk verwendet ist. Der Grund dafür dürfte in der kantenumgreifenden Beschichtung zu suchen sein, die zusätzlichen formschlüssigen Halt bietet.

In besonders vorteilhafter Weiterbildung der Erfindung kann die katalytische aktive Beschichtung mit Hilfe eines Vernetzungsmittels auf der aufgerauhten Tragstruktur verankert sein. Durch diese zusätzliche Maßnahme wird eine an die durch die vorangegangene Funkenerosion erzeugte Rauhigkeit besonders gut angepaßte Form der formschlüssigen Verankerung gewählt, die ganz besonders haftverstärkend ist.

In besonders zweckmäßiger Weiterbildung der Erfindung kann die katalytische aktive Beschichtung mit Hilfe eines Faserpelzes auf der aufgerauhten Tragstruktur verankert sein. Hierdurch wird nicht nur die Haftung der katalytisch aktiven Beschichtung in sich selbst verbessert. Bedingt durch die bei dieser Art der Rauhigkeit aufragenden Spitzen wird dadurch auch die Haftung der Beschichtung auf der Tragstruktur selbst verbessert.

Weitere Einzelheiten der Erfindung werden anhand eines in den Figuren dargestellten Ausführungsbeispiels erläutert. Es zeigen:
- FIG 1: eine vergrößerte Darstellung einer durch Sandstrahlen aufgerauhten metallischen Oberfläche,
- FIG 2: eine vergrößerte Darstellung einer durch Funkenerosion aufgerauhten metallischen Oberfläche und
- FIG 3: eine Anlage zur Herstellung des erfindungsgemäßen Katalysators.

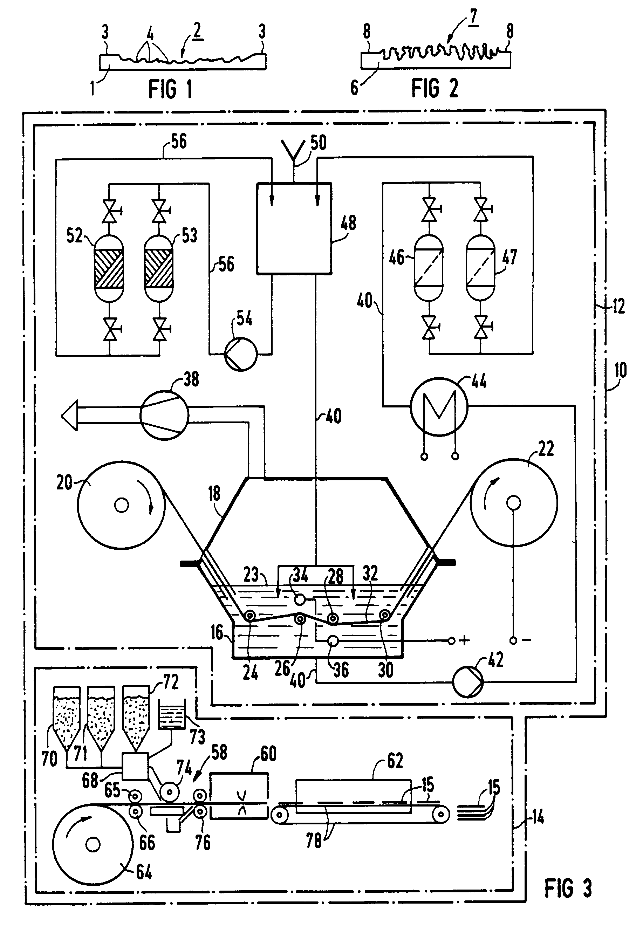

Die Figur 1 zeigt das Schliffbild 1 einer durch Sandstrahlen oder durch Korundstrahlen aufgerauhten metallischen Oberfläche 2. Man erkennt dort, daß gegenüber der ursprünglichen, an den Rändern 3 der Probe sichtbaren Oberfläche ein merklicher Metallabtrag stattgefunden hat. Des weiteren erkennt man, daß die sandgestrahlte Oberfläche eher wellenförmige gelegentlich auch V-förmige Einkerbungen 4 trägt, die sich alle zum Grund hin verengen. Daraus folgt, daß sandgestrahlte Oberflächen keinen formschlüssigen Eingriff für Zugkräfte senkrecht zur Oberfläche, sondern allenfalls für Zugkräfte tangential zur Oberfläche, auch Scherkräfte genannt, ermöglichen.

Die Figur 2 zeigt demgegenüber das Schliffbild 6 einer durch Funkenerosion aufgerauhten metallischen Oberfläche 7. Man erkennt hier gegenüber der an den Rändern 8 der Probe sichtbaren ursprünglichen Oberfläche, daß der Materialabtrag deutlich geringer ausgefallen ist und daß ein Teil des aufgeschmolzenen und/oder verdampften Materials an den Wänden der einzelnen Vertiefungen wieder angefroren ist. Dies hat zu einer recht ungleichmäßigen Erhöhung und Versteilung der Flanken geführt. Während das Schliffbild 1 der Figur 1 keinerlei formschlüssige Haftung bei Zugrichtungen senkrecht zur Oberfläche erwarten läßt, ist dies beim Schliffbild 6 einer funkenerodierten Oberfläche, wie in Figur 2 gezeigt, sehr wohl zu erwarten.

Die Figur 3 zeigt eine Anlage 10 zur Herstellung des erfindungsgemäßen Katalysators. Sie besteht aus einer Anlage 12 zur Aufrauhung der metallischen Tragstruktur 32 durch Funkenerosion und eine Anlage 14 zur Beschichtung und Fertigstellung der Katalysatorplatten 15. Die Anlage 12 zur Aufrauhung der metallischen Tragstruktur umfaßt ein Tauchbecken 16 mit einer Abdeckhaube 18 sowie eine Abspulwalze 20 und auf Aufspulwalze 22 für die metallische Tragstruktur. Im Tauchbecken 16 sind unter der Flüssigkeitsoberfläche 23 Umlenkrollen 24, 26, 28, 30 zur Führung der metallischen Tragstruktur 32 angeordnet. Das Tauchbecken 16 enthält außerdem zwei walzenförmige Elektroden 34, 36, die beide im gleichbleibenden Abstand und parallel zu je einer der Umlenkwalzen 26, 28 gegenüber der auf diesen abrollenden metallischen Tragstruktur 32 ausgerichtet sind.

Die Abdeckhaube 16 ist an eine ins Freie führende Absaugvorrichtung 38 angeschlossen. Das Tauchbecken 16 ist an eine Rezirkulationsleitung 40 angeschlossen, die eine Pumpe 42, einen Kühler 44 und mehrere parallelgeschaltete Filter 46, 47 enthält. Des weiteren ist in der Rezirkulationsleitung 40 ein Vorratsbecken 48 für die Flüssigkeit eingebaut. In dieses Vorratsbecken 48 mündet eine Nachfülleitung 50 für die Flüssigkeit. An diesem Vorratsbecken 48 ist ablaufseitig das Tauchbecken 16 angeschlossen. An diesem Vorratsbecken 48 schließt darüber hinaus auch eine an mehrere parallelgeschaltete Mischbettfilter 52, 53 angeschlossene und mit einer Umwälzpumpe 54 versehene Umwälzleitung 56 ein- und ausgangsseitig an.

Die Anlage 14 zur Beschichtung der aufgerauhten Tragstruktur und Fertigstellung der Katalysatorplatten 15 umfaßt eine Beschichtungsstation 58, eine Abschneidestation 60 und einen Durchlaufofen 62 zur Sinterung der beschichteten und Abgeschnitten Katalysatorplatten 15. Unmittelbar hinter der Vorratswalze 64 für die aufgerauhte metallische Tragstruktur sind zwei beidseitig an die metallische Tragstruktur anpreßbare, motorisch angetriebene Abzugswalzen 65, 66 angeordnet. Die Beschichtungsstation 58 enthält außerdem mehrere, an einen Mischer 68 angeschlossene Behältnisse 70, 71, 72, 73 für die verschiedenen Komponenten der aufzutragenden katalytisch aktiven Masse sowie eine obere und eine untere Auftragswalze 74, 76. An der Abschneidestation 60 schließt sich ein endloses, durch den nachfolgenden Durchlaufofen 62 führendes Transportband 78 für die abgeschnittenen beschichteten Katalysatorplatten 15 an. In hier nicht weiter dargestellter Weise können bedarfsweise vorher Wellen, Sicken und andere Formen zur gegenseitigen Beabstandung aufeinandergeschichteter Katalysatorplatten eingepreßt werden.

Vor der Inbetriebnahme der Anlage 12 zur Aufrauhung einer metallischen Tragstruktur werden das Tauchbecken 16 über das Vorratsbecken 48 entweder mit Öl, vorzugsweise mit Deionat, aufgefüllt. Beim Betrieb der Anlage zur Aufrauhung der metallischen Tragstruktur durch Funkenerosion werden die Aufspulwalze 20 und/oder die Abspulwalze 22 für die metallische Tragstruktur als Kathode geschaltet und wird die metallische Tragstruktur 32, vorzugsweise ein Streckmetall, gegebenenfalls auch ein Lochblech oder ein metallisches Flechtwerk, von der Abspulwalze 20 abgerollt und über die Umlenkwalzen 24, 26, 28, 30 im Tauchbecken 16 auf die Aufspulwalze 22 aufgespult. Dabei sind die beiden als Walzen ausgebildeten, parallel zu der zweiten und dritten Umlenkwalze 26, 28 angeordneten Gegenelektroden 34, 36 als Anoden geschaltet. Diese Anoden sind in einem definierten, konstanten Abstand über der über die zweite und dritte Umlenkwalze laufende metallische Tragstruktur angeordnet. Bei angelegter Spannung werden durch die Funkenentladungen feine punktförmige Vertiefungen in der Oberfläche der metallischen Tragstruktur erzeugt. Das dabei aufgeschmolzene und zum Teil verdampfende Material wird durch den Dampfdruck ausgeworfen und zum größten Teil an den Rändern der jeweiligen Krater wieder kondensiert und eingefroren. Bei diesem Vorgang hält sich der Abtrag des Materials insgesamt in Grenzen. Dafür wird ein großer Teil des aus jedem Krater ausgeworfenen Metalls an den Kraterrändern niedergeschlagen. Auf diese Weise entstehen steilere, unregelmäßige und sich zum Teil wieder am oberen Rand verengende Krater, die eine gute formschlüssige Haftgrundlage für das später aufzubringende katalytische Material bieten.

Die sich nicht an dem Kraterrändern niederschlagenden Metallpartikel kühlen in der Flüssigkeit ab und werden von der Flüssigkeit mitgenommen. Sie können mitsamt der Flüssigkeit über die Rezirkulationsleitung 40 abgepumpt werden. Hierbei wird zunächst die Flüssigkeit im Kühler 44 auf Zimmertemperatur gekühlt und sodann über ein mechanisches Filter 46, 47 geleitet, in dem alle Metallpartikel aufgefangen werden. Da jeweils mehrere mechanische Filter parallelgeschaltet sind, können ständig einzelne Filter abgeschaltet und neu regeneriert werden, ohne den kontinuierlichen Betrieb der Anlage zu stören. Die gefilterte und gekühlte Flüssigkeit strömt in das Vorratsbecken 48 und von dort wiederum in das Tauchbecken 16 zurück. Da sich bei der Funkenerosion auch Metallsalze bilden, die beispielsweise im Deionat in Lösung gehen, wird ständig ein Teil der im Vorratsbecken 48 befindlichen Flüssigkeit über die Umwälzpumpe 54 in mehrere, zwecks unabhängiger Regeneration parallelgeschaltete Mischbettfilter 52, 53, die mit einem Ionentauscherharz aufgefüllt sind, gepumpt und wieder in das Vorratsbecken 48 zurückbefördert. Auf diese Weise kann eine gleichmäßige, geringe Konzentration an gelösten Schwermetallsalzen in der Flüssigkeit, das heißt in Deionat bzw. Öl, aufrechterhalten werden.

Die auf der Aufspulwalze 22 aufgespulte metallische Tragstruktur hat die in der Figur 2 gezeigte Oberflächenstruktur. Für die nachgeschalteten Arbeitsgänge, das heißt für die Beschichtung mit einer katalytisch aktiven Masse, dem Zuschneiden in Platten des gewünschten Formats und für die Sinterung der katalytisch aktiven Masse braucht die Aufspulwalze 22 nur als Vorratswalze 64 in die Anlage 14 verbracht zu werden.

In der Anlage 14 wird die aus einem Behältnis 70 entnommene katalytisch aktive Masse mit einem aus dem Behältnis 71 entnommenen Vernetzungsmittel, etwa einem vernetzbaren Silikat, wie zum Beispiel Wasserglas, oder einem vernetzbaren Phosphat, wie zum Beispiel Kalziumphosphat, und einem aus dem Behältnis 73 entnommenen Lösungsmittel wie zum Beispiel Deionat oder auch Alkohol vermischt.

Bedarfsweise können auch aus dem Behältnis 72 zusätzlich zu dem Vernetzungsmittel Glasfasern zugegeben werden. Hier haben sich besonders Glasfasern kürzer als 5 mm und mit einer Stärke von etwa 10 µm bewährt. Diese Masse wird in dem Mischer 68 vermischt, nach dem Vermischen den Auftragswalzen 74, 76 in hier nur angedeuteter Weise zugeführt und von diesen auf die zuvor durch Funkenerosion aufgerauhte metallische Tragstruktur aufgewalzt. Sodann wird die beschichtete metallische Tragstruktur in der Abschneidestation 60 auf das gewünschte Plattenformat zurechtgeschnitten und in dem Durchlaufofen 62 calziniert und anschließend gestapelt. Dabei ist es möglich, die beschichtete metallische Tragstruktur vor dem Brennen in einer Presse mit Sicken zu versehen, um diese zu versteifen und eine gleichmäßige Beabstandung der Katalysatorplatten beim späteren Einbau in ein Katalysatormodul zu gewährleisten.

Insgesamt wird durch das geschilderte Verfahren der Funkenerosion eine Aufrauhung der metallischen Tragstruktur erreicht, die für die anschließend aufzubringende katalytisch aktive Beschichtung infolge formschlüssigen Eingriffs bessere Haftungsbedingungen gewährleistet. Diese Haftungsbedingungen können noch weiter durch die Verwendung von temperaturbeständigen Fasern, wie Glasfasern, Aluminiumoxidfasern und Aluminiumsilikatfasern, wie auch von Steinwollfasern sowie durch Vermischen mit einem Vernetzungsmittel, wie zum Beispiel Kalziumphosphat oder Wasserglas, noch weiter verbessert werden. Statt durch Aufwalzen kann die katalytisch aktive Mischung auch durch Tauchen in einer Aufschlämmung dieser Mischung oder durch Aufpinseln auf der aufgerauhten metallischen Tragstruktur aufgebracht werden.

## Patentansprüche

1. Katalysator für den Einsatz in heißen Abgasen mit einer oberflächlich aufgerauhten metallischen Tragstruktur und einer auf der aufgerauhten metallischen Tragstruktur aufgebrachten katalytisch aktiven Beschichtung **dadurch gekennzeichnet,** daß die metallische Tragstruktur (32) durch Funkenerosion aufgerauht ist.

2. Katalysator nach Anspruch 1, **dadurch gekennzeichnet,** daß als metallische Tragstruktur (32) ein Streckmetallblech, Lochblech oder metallisches Flechtwerk verwendet ist.

3. Katalysator nach Anspruch 1 und/oder 2, **dadurch gekennzeichnet,** daß die katalytisch aktive Beschichtung mit Hilfe eines Vernetzungsmittels (71) auf der aufgerauhten Tragstruktur (32) verankert ist.

4. Katalysator nach Anspruch 3, **dadurch gekennzeichnet,** daß als Vernetzungsmittel (71) ein vernetzbares Silikat, wie z.B. Wasserglas, verwendet ist.

5. Katalysator nach Anspruch 3, **dadurch gekennzeichnet,** daß als Vernetzungsmittel (71) ein vernetzbares Phosphat, wie z.B. Calciumphosphat, verwendet ist.

6. Katalysator nach einem der Ansprüche 1 bis 5, **dadurch gekennzeichnet,** daß die katalytisch aktive Beschichtung mit Hilfe eines Faserpelzes auf der aufgerauhten Tragstruktur (32) verankert ist.

7. Katalysator nach Anspruche 6, **dadurch gekennzeichnet,** daß Fasern (72) kürzer als 5 mm und mit einem Durchmesser kleiner als 10 µm verwendet sind.

8. Katalysator nach Anspruch 6 oder 7, **gekennzeichnet** durch die Verwendung von Glasfasern.

9. Katalysator nach einem der Ansprüche 6 bis 8, **gekennzeichnet** durch die Verwendung von Steinwollfasern.

10. Katalysator nach einem der Ansprüche 6 bis 9, **gekennzeichnet** durch die Verwendung von Aluminiumsilikatfasern.

11. Katalysator nach einem der Ansprüche 1 bis 10, **gekennzeichnet** durch die Verwendung von Aluminiumoxidfasern.

12. Verfahren zur Erzeugung eines Katalysators mit einer aufgerauhten Tragstruktur nach einem der Ansprüche 1 bis 11, **dadurch gekennzeichnet,** daß die Tragstruktur vor der Auftragung der katalytisch aktiven Masse an einer sich quer zur Transportrichtung der Tragstruktur mit gleichbleibendem Abstand von derselben erstreckenden Gegenelektrode (34, 36) vorbeigeführt und durch Funkenerosion erodiert wird.

13. Verfahren nach Anspruch 12, **dadurch gekennzeichnet,** daß die Funkenerosion unter Wasser (Deionat) erfolgt.

14. Verfahren nach Anspruch 12, **dadurch gekennzeichnet,** daß die Funkenerosion unter Öl erfolgt.

15. Verfahren nach einem oder mehreren der Ansprüche 12 bis 14, **dadurch gekennzeichnet,** daß die Tragstruktur (12) während der Funkenerosion als Kathode geschaltet ist.

16. Verfahren nach einem oder mehreren der Ansprüche 12 bis 15, **dadurch gekennzeichnet,** daß mit einer Stromstärke von 20 bis 40 A/dm² funkenerodiert wird.

17. Verfahren nach einem oder mehreren der Ansprüche 12 bis 16, **dadurch gekennzeichnet,** daß die katalytisch aktive Masse vor der Auftragung auf die aufgerauhte Tragstruktur (32) mit Fasern (72) vermischt wird.

18. Verfahren nach einem oder mehreren der Ansprüche 12 bis 16, **dadurch gekennzeichnet,** daß die Fasern vor der Auftragung der katalytisch aktiven Beschichtung auf der aufgerauhten Tragstruktur aufgetragen werden.

19. Verfahren nach Anspruch 18, **dadurch gekennzeichnet,** daß der Auftrag der Fasern auf die Tragstruktur durch ein Aufblasen eines Gas-Fasergemisches erfolgt.

20. Verfahren nach Anspruch 18 und 19, **dadurch gekennzeichnet,** daß die Tragstruktur beim Aufblasen der Fasern gegenüber den Fasern elektrisch aufgeladen ist.

21. Vorrichtung zur Durchführung des Verfahrens nach einem oder mehreren der Ansprüche 12 bis 20, **dadurch gekennzeichnet,** daß ein mit einer Abdeckhaube (18) abgedecktes Tauchbecken (16) verwendet ist, in das die unbeschichtete, metallische Tragstruktur (32) als fortlaufendes Band eintaucht und über Walzen (24, 26, 28, 30) wieder herausgeführt wird und bei der unter der Flüssigkeitsoberfläche des Tauchbeckens eine sogenannte Abstandswalze (26, 28) drehbar gelagert ist, über die die Tragstruktur geführt wird und die sich im definierten Abstand von einer parallel zur Abstandswalze geführten walzenförmigen Elektrode (34, 36) befindet.

22. Vorrichtung nach Anspruch 21, **dadurch gekennzeichnet,** daß dem Tauchbecken (16) eine Beschichtungsstation (58) und eine Abschneidestation (60) für die metallische Tragstruktur (32) nachgeschaltet sind.

23. Vorrichtung nach Anspruch 21, **dadurch gekennzeichnet,** daß die Haube (18) mit einer Absaugvorrichtung (38) für die sich bildenden Gase versehen ist.

24. Vorrichtung nach Anspruch 21 und/oder 23, **dadurch gekennzeichnet,** daß das Tauchbecken (16) über eine mit einer Pumpe (42) ausgerüsteten Rezirkulationsleitung (40) an einer Filtervorrichtung (46, 47) für die Flüssigkeit angeschlossen ist.

25. Vorrichtung nach einem oder mehreren der Ansprüche 21 bis 24, **dadurch gekennzeichnet,** daß die Filtervorrichtung parallel zueinander geschaltete und unabhängig voneinander regenerierbare Filter (46, 47) enthält.

26. Vorrichtung nach einem oder mehreren der Ansprüche 21 bis 25, **dadurch gekennzeichnet,** daß ein Kühler (44) für die Flüssigkeit in der Rezirkulationsleitung (40) eingebaut ist

## Claims

1. Catalytic converter for use in hot exhaust gases with a metal support structure roughened on the surface and a catalytically active coating applied to the roughened metal support structure, characterized in that the metal support structure (32) is roughened by spark erosion.

2. Catalytic converter according to Claim 1, characterized in that an expanded metal sheet, perforated metal sheet or metal braided structure is used as the metal support structure (32).

3. Catalytic converter according to Claim 1 and/or 2, characterized in that the catalytically active coating is anchored to the roughened support structure (32) with the aid of a cross-linking agent (71).

4. Catalytic converter according to Claim 3, characterized in that a cross-linkable silicate, such as waterglass, is used as the cross-linking agent (71).

5. Catalytic converter according to Claim 3, characterized in that a cross-linkable phosphate, such as calcium phosphate, is used as the cross-linking agent (71).

6. Catalytic converter according to one of Claims 1 to 5, characterized in that the catalytically active coating is anchored to the roughened support structure (32) with the aid of a fibre fleece.

7. Catalytic converter according to Claim 6, characterized in that fibres (72) shorter than 5 mm and with a diameter less than 10 µm are used.

8. Catalytic converter according to Claim 6 or 7, characterized by the use of glass fibres.

9. Catalytic converter according to one of Claims 6 to 8, characterized by the use of steel wool fibres.

10. Catalytic converter according to one of Claims 6 to 9, characterized by the use of aluminium silicate fibres.

11. Catalytic converter according to one of Claims 1 to 10, characterized by the use of aluminium oxide fibres.

12. Process for producing a catalytic converter with a roughened support structure according to one of Claims 1 to 11, characterized in that before the catalytically active composition is applied the support structure is moved past a counter electrode (34, 36) extending transversely to the transport direction of the support structure at a constant distance from the same and is eroded by spark erosion.

13. Process according to Claim 12, characterized in that the spark erosion takes place under water (deionized water).

14. Process according to Claim 12, characterized in that the spark erosion takes place under oil.

15. Process according to one or more of Claims 12 to 14, characterized in that the support structure (12) is connected as a cathode in the course of the spark erosion.

16. Process according to one or more of Claims 12 to 15, characterized in that the spark erosion is carried out at a current intensity of 20 to 40 A/dm².

17. Process according to one or more of Claims 12 to 16, characterized in that the catalytically active composition is mixed with fibres (72) before application to the roughened support structure (32).

18. Process according to one or more of Claims 12 to 16, characterized in that the fibres are applied to the roughened support structure before application of the catalytically active coating.

19. Process according to Claim 18, characterized in that the application of the fibres to the support structure takes place by a top-blowing of a gas/fibre mixture.

20. Process according to Claim 18 and 19, characterized in that the support structure is electrically charged with respect to the fibres during the top-blowing of the fibres.

21. Device for implementing the process according to one or more of Claims 12 to 20, characterized in that an immersion tank (16) covered with a covering hood (18) is used, into which tank the uncoated metal support structure (32) immerses in the form of a continuous strip and is moved out again over rollers (24, 26, 28, 30), and in which a so-called spacer roller (26, 28) is rotatably supported under the surface of the liquid in the immersion tank, over which roller the support structure is guided and which is located at a defined distance from a roller-shaped electrode (34, 36) guided parallel to the spacer roller.

22. Device according to Claim 21, characterized in that a coating station (58) and a cutting station (60) for the metal support structure (32) is connected following the immersion tank (16).

23. Device according to Claim 21, characterized in that the hood (18) is provided with a suction device (38) for the gases which form.

24. Device according to Claim 21 and/or 23, characterized in that the immersion tank (16) is connected to a filter device (46, 47) for the liquid via a re-circulation line (40) equipped with a pump (42).

25. Device according to one or more of Claims 21 to 24, characterized in that the filter device contains filters (46, 47) which are connected parallel to one another and can be regenerated independently of one another.

26. Device according to one or more of Claims 21 to 25, characterized in that a cooler (44) for the liquid is built into the re-circulation line (40).

## Revendications

1. Catalyseur à utiliser dans des gaz d'échappement chauds, pourvu d'une structure de support métallique rendue rugueuse en surface et d'un revêtement à action catalytique appliqué sur la structure de support métallique rendue rugueuse, ce catalyseur étant caractérisé en ce que la structure de support (32) métallique est rendue rugueuse par électro-érosion.

2. Catalyseur selon la revendication 1, caractérisé en ce que l'on utilise, pour la structure de support (32) métallique, une tôle de métal déployé, une tôle perforée ou un treillis métallique.

3. Catalyseur selon la revendication 1 et/ou la revendication 2, caractérisé en ce que le revêtement à action catalytique est fixé sur la structure de support (32) rendue rugueuse à l'aide d'un agent de réticulation (71).

4. Catalyseur selon la revendication 3, caractérisé en ce que l'on utilise, pour l'agent de réticulation (71), un silicate réticulable, comme par exemple du silicate de sodium.

5. Catalyseur selon la revendication 3, caractérisé en ce que l'on utilise, pour l'agent de réticulation (71), un phosphate réticulable, comme par exemple du phosphate de calcium.

6. Catalyseur selon l'une des revendications 1 à 5, caractérisé en ce que le revêtement à action catalytique est fixé sur la structure de support (32) rendue rugueuse à l'aide d'une nappe fibreuse.

7. Catalyseur selon la revendication 6, caractérisé en ce que l'on utilise des fibres (72) de longueur inférieure à 5 mm et de diamètre inférieur à 10 µm.

8. Catalyseur selon l'une des revendications 6 ou 7, caractérisé en ce que l'on utilise des fibres de verre.

9. Catalyseur selon l'une des revendications 6 à 8, caractérisé en ce que l'on utilise des fibres de laine minérale.

10. Catalyseur selon l'une des revendications 6 à 9, caractérisé en ce que l'on utilise des libres de silicate d'aluminium.

11. Catalyseur selon l'une des revendications 1 à 10, caractérisé en ce que l'on utilise des fibres d'oxyde d'aluminium.

12. Procédé pour la fabrication d'un catalyseur pourvu d'une structure de support rendue rugueuse selon l'une des revendications 1 à 11, caractérisé en ce que la structure de support passe, avant dépôt de la masse à action catalytique, devant une contre-électrode (34, 36) s'étendant perpendiculairement à la direction de transport de cette structure de support et à distance égale de celle-ci, et est érodée par électro-érosion.

13. Procédé selon la revendication 12, caractérisé en ce que l'électro-érosion a lieu sous l'eau (désionisée).

14. Procédé selon la revendication 12, caractérisé en ce que l'électro-érosion a lieu sous l'huile.

15. Procédé selon l'une ou plusieurs des revendications 12 à 14, caractérisé en ce que la structure de support (32) constitue la cathode pendant l'électro-érosion.

16. Procédé selon l'une ou plusieurs des revendications 12 à 15, caractérisé en ce que l'électro-érosion est exécutée avec un ampérage de 20 à 40 A/dm².

17. Procédé selon l'une ou plusieurs des revendications 12 à 16, caractérisé en ce que la masse à action catalytique est mélangée avec des fibres (72) avant son dépôt sur la structure de support (32) rendue rugueuse.

18. Procédé selon l'une ou plusieurs des revendications 12 à 16, caractérisé en ce que les fibres sont déposées sur la structure de support rendue rugueuse avant l'application du revêtement à action catalytique.

19. Procédé selon la revendication 18, caractérisé en ce que le dépôt des fibres sur la structure de support est effectué par soufflage d'un mélange gaz-fibres.

20. Procédé selon les revendications 18 et 19, caractérisé en ce que la structure de support est chargée électriquement par rapport aux fibres lors du soufflage de ces dernières.

21. Dispositif pour l'exécution du procédé selon l'une ou plusieurs des revendications 12 à 20, caractérisé en ce que l'on utilise une cuve à immersion (16) recouverte d'un couvercle (18), dans laquelle la structure de support (32) métallique dépourvue de revêtement est plongée sous forme d'une bande continue, et ressortie en passant sur des cylindres (24, 26, 28, 30), et en ce qu'un cylindre (26, 28) dit d'espacement, et rotatif, est situé au-dessous de la surface du liquide dans la cuve à immersion, cylindre sur lequel passe la structure de support et qui se trouve à une distance définie d'une électrode (34, 36) cylindrique réalisée parallèlement au cylindre d'espacement.

22. Dispositif selon la revendication 21, caractérisé en ce qu'une station de revêtement (58) et un poste de découpe (60) pour la structure de support (32) métallique sont situés en aval de la cuve à immersion (16).

23. Dispositif selon la revendication 21, caractérisé en ce que le couvercle (18) est pourvu d'un dispositif d'aspiration (38) pour les gaz qui se forment.

24. Dispositif selon la revendication 21 et/ou la revendication 23, caractérisé en ce que la cuve à immersion (16) est reliée à un dispositif de filtrage (46, 47) pour le liquide par l'intermédiaire d'une conduite de recirculation (40) équipée d'une pompe (42).

25. Dispositif selon l'une ou plusieurs des revendications 21 à 24, caractérisé en ce que le dispositif de filtrage comporte des filtres (46, 47) montés de manière parallèle l'un à l'autre et pouvant se régénérer indépendamment l'un de l'autre.

26. Dispositif selon l'une ou plusieurs des revendications 21 à 25, caractérisé en ce qu'un dispositif de refroidissement (44) pour le liquide est intégré dans la conduite de recirculation (40).
